# FASCICULE DE BREVET EUROPEEN

(11) **EP 3 642 049 B1**
(45) Date de publication et mention de la délivrance du brevet: **29.03.2023**
(21) Numéro de dépôt: 18752798.1
(22) Date de dépôt: 20.06.2018
(51) Int. Cl.: B60C 1/00, B60C 7/14, C08L 77/02

(54) **PNEU NON PNEUMATIQUE COMPRENANT UNE COMPOSITION COMPRENANT UN POLYMÈRE THERMOPLASTIQUE ET UN ÉLASTOMÈRE THERMOPLASTIQUE**
REIFEN MIT EINEM THERMOPLASTISCHEN POLYMER UND EINEM THERMOPLASTISCHEN ELASTOMER
NON-PNEUMATIC TYRE HAVING A COMPOSITION COMPRISING A THERMOPLASTIC POLYMER AND A THERMOPLASTIC ELASTOMER

(30) Priorité: 22.06.2017 FR 1755691
(43) Date de publication de la demande: 29.04.2020
(73) Titulaire: Compagnie Générale des Etablissements Michelin, 63000 Clermont-Ferrand (FR)
(72) Inventeur: ODDON, Mathieu, 63040 Clermont-Ferrand Cedex 9 (FR)
(74) Mandataire: Wroblewski, Nicolas Paul André
(86) Numéro de dépôt international: PCT/FR2018/051486
(87) Numéro de publication internationale: WO 2018/234693

(56) Documents cités:
- WO-A1-2014/041167
- WO-A1-2016/016696
- WO-A1-2016/174314
- FR-A1- 2 963 353

## Description

La présente invention est relative à un pneu non pneumatique à support structurel, et à la composition des éléments de ce pneu non pneumatique.

Les pneus non pneumatiques à support structurel, sont connus depuis plusieurs années et sont notamment décrits dans le brevet EP1420964. Ce type de pneu non pneumatique à support structurel n'a pas de cavité destinée à contenir de l'air sous pression et, par conséquent, n'a pas besoin de former un joint étanche avec la jante de roue pour retenir la pression d'air interne. Ce type de pneu non pneumatique à support structurel comprend une bande annulaire, une pluralité de rayons s'étendant transversalement et radialement à l'intérieur de la bande annulaire et des moyens pour raccorder la pluralité de rayons avec une roue, la bande annulaire comprenant usuellement une couche de cisaillement en élastomère, au moins une première membrane adhérant à une partie située radialement à l'intérieur de la couche de cisaillement et au moins une seconde membrane adhérant à la partie située radialement à l'extérieur de la couche de cisaillement, chacune de ces membranes ayant un module d'élasticité de tension longitudinale supérieur au module de cisaillement de la couche de cisaillement.

Une grande partie des propriétés des pneus non pneumatiques repose sur les caractéristiques mécaniques des rayons qui le composent. Ces derniers doivent être constitués d'un matériau à la fois rigide et déformable pour supporter la charge et transmettre les efforts tout en se déformant lors des tours de roue et des passages d'obstacles.

Il est connu d'utiliser des matériaux de type polyuréthane, qui répondent à ces critères, tel que le polyuréthane de marque Vibrathane B836 décrit dans le document EP1420964. Cependant, de manière connue de l'homme du métier, le temps de mise en oeuvre des polyuréthanes est long. Il serait donc avantageux pour les fabricants de pneus non pneumatiques de disposer de solutions techniques permettant de diminuer le temps de fabrication des rayons.

Par ailleurs, il est d'intérêt constant de baisser la résistance au roulement des pneumatiques, également des pneus non pneumatiques afin de diminuer la consommation d'énergie lors de l'utilisation des pneus.

Ainsi, il ressort de l'état de la technique qu'un besoin existe de pouvoir diminuer le temps de fabrication des rayons des pneus non pneumatiques et de baisser la résistance au roulement de ces pneus.

Poursuivant leurs recherches, la Demanderesse a à présent découvert, de manière inattendue, qu'une composition particulière pour les rayons des pneus non pneumatiques permettait de concilier d'excellentes propriétés de rigidité, de déformabilité et de faible résistance au roulement aux pneus non-pneumatiques utilisant ces compositions.

Ainsi, selon un premier objet, la présente invention concerne un pneu non pneumatique à support structurel comprenant une bande de roulement, une bande annulaire, une pluralité de rayons s'étendant transversalement et radialement à l'intérieur de la bande annulaire et des moyens pour raccorder la pluralité de rayons avec une roue, caractérisé en ce que les rayons comprennent une composition polymérique à base d'au moins une matrice polymérique comprenant 50 à 70% d'un ou plusieurs polymères thermoplastiques dont la température de transition vitreuse (Tg), **mesurée par DSC selon norme ASTM D3418,** est comprise dans un domaine allant de 120 à 250°C et 30 à 50% d'un ou plusieurs élastomères thermoplastiques ; ledit ou lesdits élastomères thermoplastiques étant compatibles avec ledit ou lesdits polymères thermoplastiques, de telle façon que l'allongement à la rupture du mélange de ces polymères est supérieur ou égal à l'allongement à la rupture du ou des polymères thermoplastiques seuls.

### DESCRIPTION DETAILLEE DE L'INVENTION

L'invention ainsi que ses avantages seront aisément compris à la lumière de la description détaillée et des exemples de réalisation.

Dans la présente demande, on entend par "caoutchouc" ou "élastomère" (les deux termes étant considérés comme synonymes), tout type d'élastomère (diénique ou non diénique) ; "caoutchouc diénique", tout élastomère (élastomère seul ou mélange d'élastomères) qui est issu, au moins en partie (soit un homopolymère, soit un copolymère), de monomères diènes c'est-à-dire de monomères porteurs de deux doubles liaisons carbonecarbone, que ces dernières soient conjuguées ou non.

D'autre part, sauf indication expresse différente, tous les pourcentages (%) indiqués sont des pourcentages en masse.

Par ailleurs, le terme « pcm » signifie au sens de la présente demande de brevet, partie en poids pour cent parties de matrice polymérique, tout type de polymères confondus, notamment, élastomères thermoplastiques et polymères thermoplastiques confondus.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'il est fait référence à une température de transition vitreuse (Tg) pour la description de la présente invention, il s'agit de la Tg telle que mesurée par DSC selon norme ASTM D3418.

Lorsqu'il est fait référence à l'allongement rupture d'un matériau ou d'un mélange de matériaux, il s'agit de l'allongement rupture tel que mesuré par des essais de traction, bien connus de l'homme du métier, qui permettent de déterminer les contraintes d'élasticité et les propriétés à la rupture. Sauf indication différente, ils sont effectués conformément à la norme française NF T 46-002 de septembre 1988. Un traitement des enregistrements de traction permet de tracer la courbe de module en fonction de l'allongement. On mesure également les contraintes à la rupture (en MPa) et les allongements à la rupture (AR en %), dans les conditions normales de température (23±2°C) et d'hygrométrie (50±5% d'humidité relative), selon la norme française NF T 40-101 (décembre 1979).

Lorsqu'il est fait référence au module d'Young d'un matériau ou d'un mélange de matériaux, il s'agit du module d'Young à température ambiante (23°C) (pour rappel, module initial en extension) souvent noté E tel que mesuré selon une méthode bien connue de l'homme du métier. Les courbes force-allongement, mesurées par exemple selon la norme ASTM D638-02 pour des bandes d'épaisseur supérieure à 1 mm, ou encore selon la norme ASTM D882-09 pour des couches fines dont l'épaisseur est au plus égale à 1 mm ; par exemple à 5 mm/min avec un extensomètre « Instron - Strain Gauge Extensometer », permettent de déduire les valeurs de module E , exprimées en MPa, et calculées par rapport à la section initiale de l'éprouvette fractionnée.

Egalement, lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### 1. Pneu non pneumatique de l'invention

Le pneu non pneumatique de l'invention, à support structurel, comprend une bande de roulement, une bande annulaire, une pluralité de rayons s'étendant transversalement et radialement à l'intérieur de la bande annulaire et des moyens pour raccorder la pluralité de rayons avec une roue ou moyeu.

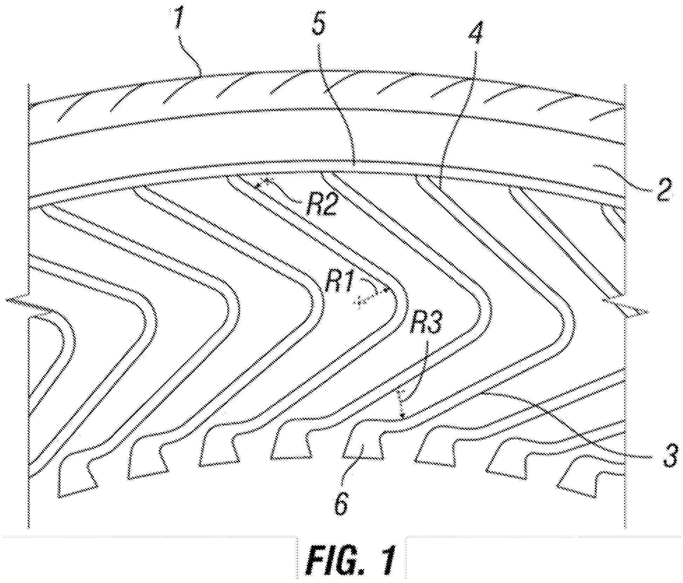

La structure du pneu non pneumatique de l'invention se comprendra mieux en se référant à la description ci-après et à la Figure 1 (Fig. 1), qui représente en vue schématique une section dans le plan équatorial d'un pneu selon l'invention. Le pneu représenté est un mode de réalisation préféré, l'invention ne se limitant pas à ce mode de réalisation. La figure n'est pas représentée à l'échelle, et les dimensions de certains éléments ont été grossies ou réduites par souci de clarté de l'illustration. On appelle « plan équatorial » un plan qui passe perpendiculairement à l'axe de rotation du pneu et coupe la structure du pneu. Le « plan méridien » est un plan qui traverse et comprend l'axe de rotation du pneu.

Le pneu représenté à la Fig. 1 supporte une charge par le biais de ses éléments structurels sans l'aide d'une pression de gaz. Le pneu a une bande de roulement 1 en contact avec le sol, une bande annulaire 2 disposée radialement à l'intérieur de la bande de roulement 1, une pluralité de rayons 3 et 4 s'étendant transversalement et radialement à l'intérieur de la bande annulaire, une bande d'interface 5, optionnelle pour l'invention, supportant les rayons et située radialement à l'intérieur par rapport à la bande annulaire, et, comme moyen pour raccorder la pluralité de rayons avec une roue ou moyeu, une partie terminale élargie 6 des rayons adaptée pour entrer en prise avec une fente dans la roue ou moyeu. L'expression "s'étendant transversalement" utilisée ici signifie que les rayons peuvent être alignés axialement ou peuvent être en diagonale par rapport à l'axe du pneu. Par ailleurs, l'expression "s'étendant radialement à l'intérieur" signifie que les rayons peuvent reposer dans un plan radial par rapport à l'axe du pneu ou peuvent être en diagonale par rapport au plan radial.

La bande annulaire 2 supporte les charges appliquées au pneu.

On peut distinguer dans le pneu non pneumatique de l'invention deux parties essentielles, l'une étant la partie externe composée de la bande de roulement et de la bande annulaire, l'autre étant la partie interne composée des rayons et des moyens de raccordement à la roue ou moyeu.

### 1.1 Partie externe

Le pneu non pneumatique de l'invention, à support structurel, comprend au moins une bande de roulement et une bande annulaire. La bande de roulement peut être de tout type de matériau élastomérique, et peut être sculptée pour un contact optimal avec le sol.

Lorsqu'elle est sous charge, la bande annulaire a la capacité de fléchir à partir d'une forme circulaire normale pour s'adapter à une surface de contact telle que la surface d'une route.

De préférence, la bande annulaire comprend un ou plusieurs matériaux renforcés dans une composition élastomérique.

Le module des matériaux élastomères est le module d'élasticité de tension avec un allongement de 10% mesuré selon le procédé d'essai standard ASTM D412. Le « module de cisaillement » des matériaux élastomères est le module d'élasticité de cisaillement et se définit comme étant équivalent à un tiers du module d'élasticité de tension défini ci-dessus pour les matériaux élastomères.

Les matériaux renforcés ont préférentiellement un module d'élasticité de tension circonférentielle suffisamment supérieur au module d'élasticité de cisaillement de la composition élastomérique pour que, sous une charge appliquée de l'extérieur, la partie en contact avec le sol se déforme pour passer d'une forme sensiblement circulaire à une forme adaptée à la surface du sol tout en conservant une longueur sensiblement constante de la bande annulaire.

Selon une forme de réalisation préférée, les matériaux renforcés comprennent des éléments de renfort sensiblement inextensibles noyés dans un revêtement élastomère. Les éléments de renfort peuvent être des matériaux quelconques appropriés pour servir de renforts de bandages de pneu dans des pneus classiques, tels que des monofilaments ou des cordons d'acier, d'aramide ou autres textiles à module élevé.

N'importe quel matériau approprié peut être utilisé pour les matériaux renforcés de la bande annulaire, de préférence tel qu'il respecte les conditions, décrites ci-après, concernant les propriétés de rigidité de la bande annulaire. Autrement dit, la structure des matériaux renforcés peut être l'une quelconque de plusieurs alternatives telles qu'un matériau homogène (par exemple une feuille métallique mince), une matrice renforcée de fibres ou une couche ayant des éléments de renfort discrets.

De préférence pour la bande annulaire du pneu de l'invention, le rapport du module de tension longitudinale du matériau renforcé sur le module de cisaillement de la composition élastomère est d'au moins environ 100:1, et de préférence d'au moins environ 1000:1.

### 1.2 Partie interne

Le pneu non pneumatique de l'invention, à support structurel, comprend, en plus de la bande de roulement et de la bande annulaire, une pluralité de rayons s'étendant transversalement et radialement à l'intérieur de la bande annulaire et des moyens pour raccorder la pluralité de rayons avec une roue ou moyeu.

Selon un moyen possible et préféré pour raccorder la pluralité de rayons avec la roue ou moyeu, les rayons peuvent être raccordés entre eux par une bande de montage radialement intérieure qui encercle la roue ou moyeu pour monter le pneu.

Alternativement, chacun des rayons peut comprendre une partie terminale élargie adaptée pour entrer en prise avec une fente dans la roue.

Comme discuté précédemment, les rayons agissent en tension pour transmettre des forces de charge entre la roue et la bande annulaire, supportant ainsi, entre autres fonctions, la masse d'un véhicule. La roue ou moyeu peut être considérée comme suspendue à la partie supérieure du pneu. De préférence, les rayons ont une rigidité radiale effective élevée en tension. La rigidité en tension des rayons est donc un aspect essentiel du pneu non pneumatique de l'invention et la composition particulière des rayons selon l'invention permet d'atteindre une rigidité en tension élevée, supérieure à 1 GPa comme montré dans ce qui suit.

Les rayons transmettent aussi les forces nécessaires pour accélérer, s'arrêter et tourner. L'agencement et l'orientation des rayons peuvent être sélectionnés de manière à obtenir la fonction souhaitée. Par exemple, dans des applications où des forces circonférentielles relativement faibles sont générées, les rayons peuvent être agencés radialement et parallèlement à l'axe de rotation du pneu. Pour procurer une rigidité dans la direction circonférentielle, on peut ajouter des rayons perpendiculaires à l'axe de rotation, alternant avec les rayons alignés sur l'axe. Une autre alternative consiste à agencer les rayons en diagonale par rapport à l'axe du pneu pour procurer une rigidité à la fois dans les directions circonférentielle et axiale. Une autre alternative consiste à orienter les rayons dans un agencement en diagonale alterné, autrement dit selon un motif en zigzag vu dans le plan équatorial.

Selon un mode de réalisation préférentiel de l'invention, les rayons sont en forme de V dans le plan équatorial.

La figure 1 présente un mode de réalisation préférentiel de cette géométrie des rayons, en forme de V , présentant ainsi une partie interne (référence 3 sur la figure 1) et une partie externe (référence 4 sur la figure 1), formant entre elles un angle R1, la partie externe formant un angle R2 avec la bande annulaire et la partie interne formant un angle R3 avec le moyeu ou la roue.

Lors du montage, selon un mode préféré de l'invention, les rayons en forme de V sont prétendus, c'est-à-dire étirés radialement lors de leur ancrage à la roue. Cette pré-tension permet lors de l'utilisation du pneu, un confort amélioré.

Ainsi, selon des arrangements préférés pour l'invention : chaque rayon peut être orienté parallèlement à la direction axiale, ou alors chaque rayon peut être orienté en diagonale par rapport à la direction axiale, ou encore, des rayons adjacents entre eux sont orientés selon des angles en diagonale opposés par rapport à la direction axiale, formant un zigzag dans le plan équatorial, ou également, la pluralité de rayons est orientée en paires croisées formant un motif en X se répétant dans le plan équatorial, ou enfin et plus préférentiellement, chaque rayon est en forme de V dans le plan équatorial.

Dans une forme de réalisation, les rayons peuvent être raccordés entre eux par une bande de montage radialement intérieure qui encercle la roue ou moyeu pour monter le pneu.

De préférence, le pneu peut comprendre en outre une bande d'interface raccordant entre eux les rayons au niveau de leurs extrémités radialement extérieures. Cette bande d'interface est située radialement à l'intérieur par rapport à la bande annulaire et raccorde ainsi les rayons cette bande annulaire. Par commodité, les rayons, la bande d'interface et le cas échéant la bande de montage peuvent être moulés dans un matériau unique sous forme d'unité.

Un support de charge pratiquement purement en tension est obtenu du fait que l'on a un rayon qui possède une rigidité élevée en tension.

Les rayons doivent résister à la torsion entre la bande annulaire et la roue, par exemple lorsqu'un couple est appliqué aux roues. De plus, les rayons doivent résister à la déflexion latérale, par exemple lorsqu'on tourne ou qu'on braque. Comme on le comprendra, les rayons qui reposent dans le plan radial-axial, c'est-à-dire qui sont alignés avec les directions radiale et axiale, offrent une grande résistance aux forces dirigées axialement, mais - en particulier s'ils sont allongés dans la direction radiale - peuvent avoir de la difficulté à résister aux couples dans la direction circonférentielle. Pour certains véhicules et certaines applications, par exemple ceux produisant des forces d'accélération relativement faibles, un jeu de rayons comprenant des rayons relativement courts alignés avec la direction radiale est approprié.

Selon l'invention, et quel que soit l'arrangement des rayons et des éléments structurels du pneu non pneumatique décrits ci-dessus, le matériau constituant les rayons présente un module de tension élevé. Les rayons peuvent être renforcés si on le souhaite. En outre, il est souhaitable d'avoir un matériau avec une hystérèse faible dans les conditions d'utilisation. La composition des rayons selon l'invention est discutée en détail dans la partie 2 ci-dessous.

### 2. Composition des rayons du pneu non-pneumatique selon l'invention

Les rayons du pneu de l'invention comprennent une composition polymérique à base d'au moins une matrice polymérique comprenant 50 à 70% d'un ou plusieurs polymères thermoplastiques dont la température de transition vitreuse (Tg) est comprise dans un domaine allant de 120 à 250°C et 30 à 50% d'un ou plusieurs élastomères thermoplastiques ; ledit ou lesdits élastomères thermoplastiques étant compatibles avec ledit ou lesdits polymères thermoplastiques.

Pour la présente invention, on considère que ledit ou lesdits élastomères thermoplastiques sont compatibles avec ledit ou lesdits polymères thermoplastiques lorsque l'allongement à la rupture du mélange de ces polymères (élastomères thermoplastiques et polymères thermoplastiques) est supérieur ou égal à l'allongement à la rupture du ou des polymères thermoplastiques seuls.

Les polymères thermoplastiques, les élastomères thermoplastiques et les charges renforçantes nécessaires à l'invention vont être décrits en détail ci-après, ainsi que les modes de réalisations préférentiels de l'invention.

### 2.1 Polymère thermoplastique

La matrice polymérique de la composition des rayons du pneu selon l'invention comprend 50 à 70% d'un ou plusieurs polymères thermoplastiques dont la température de transition vitreuse (Tg) est comprise dans un domaine allant de 120 à 250°C.

De préférence pour les besoins de l'invention, le ou les polymères thermoplastiques présentent une Tg comprise dans un domaine allant de 140 à 230°C, de préférence de 150°C à 220°C, mieux de 160°C à 210°C.

Le ou les polymères thermoplastiques sont choisis préférentiellement dans le groupe constitué par les polyamides, les polycarbonates, et les mélanges de ces derniers.

De préférence, le ou les polymères thermoplastiques sont un ou des polyamides amorphes et plus préférentiellement le ou les polymères thermoplastiques sont un ou des polyamides amorphes, homopolymères ou copolymères constitués de monomères cycloaliphatiques et/ou aromatiques.

Comme exemple de polymère thermoplastique convenant à l'invention, on peut citer le polyamide amorphe « Rilsan clear G170 » de la société Arkema, qui présente une Tg de 168°C.

Dans la composition du pneumatique de l'invention, le polymère thermoplastique (c'est à dire le ou les polymères thermoplastiques) représente de 50 à 70%, de préférence de 55 à 65% en poids de l'ensemble des polymères présents dans la composition.

### 2.2 Elastomère thermoplastique

La matrice polymérique de la composition des rayons du pneu selon l'invention comprend 30 à 50% d'un ou plusieurs élastomères thermoplastiques (TPE).

De manière générale, les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

Pour les besoins de l'invention, ledit élastomère thermoplastique peut être préférentiellement un TPE spécifique, copolymère bloc comprenant au moins un bloc élastomère de type polyéther et au moins un bloc thermoplastique de type non styrénique (TPNS). Cet élastomère est aussi noté TPE à blocs polyéther et TPNS dans la suite de la demande. Dans ce qui suit, lorsqu'il est fait référence à un bloc polyéther, il s'agit donc d'un bloc élastomérique majoritairement (c'est-à-dire à plus de 50% en poids, de préférence à plus de 80 % en poids) composé d'un polymère issu de la polymérisation de monomère de type éther, et, lorsqu'il est fait référence à un bloc non styrénique, il s'agit d'un bloc composé majoritairement (c'est-à-dire à plus de 50% en poids, de préférence à plus de 80 % en poids) d'un polymère issu de la polymérisation de monomère autre que les composés styréniques (c'est à dire le styrène et les styrènes substitués et/ou fonctionnalisés).

Egalement et préférentiellement, ledit élastomère thermoplastique peut être un autre TPE spécifique, copolymère bloc comprenant au moins un bloc élastomère de type copolymère statistique butadiène-styrène éventuellement hydrogéné (H)SBR et au moins un bloc thermoplastique de type copolymère styrénique (PS). Dans ce qui suit, lorsqu'il est fait référence à un bloc (H)SBR, il s'agit donc d'un bloc élastomérique majoritairement (c'est-à-dire à plus de 50% en poids, de préférence à plus de 80 % en poids) composé d'un copolymère statistique de butadiène et de styrène, ce copolymère pouvant ou non être hydrogéné, et, lorsqu'il est fait référence à un bloc styrénique, il s'agit d'un bloc composé majoritairement (c'est-à-dire à plus de 50% en poids, de préférence à plus de 80 % en poids) d'un polymère styrénique tel qu'un polystyrène.

Ainsi, de préférence pour les besoins de l'invention, l'élastomère thermoplastique est choisi dans le groupe constitué par les copolymères à blocs comprenant au moins un bloc élastomère de type polyéther et au moins un bloc thermoplastique de type non styrénique, les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques. Plus préférentiellement, l'élastomère thermoplastique est choisi dans le groupe constitué par les copolymères à blocs comprenant au moins un bloc élastomère de type polyéther et au moins un bloc thermoplastique polyamide (PEBA), les copolymères à blocs comprenant au moins un bloc élastomère de type polyéther et au moins un bloc thermoplastique polyester (COPE), les copolymères à blocs comprenant au moins un bloc élastomère de type copolymère statistique butadiène-styrène éventuellement hydrogéné et au moins un bloc thermoplastique de type styrénique (TPE (H)SBR-PS), et les mélanges de ces élastomères thermoplastiques. Plus préférentiellement, l'élastomère thermoplastique est choisi dans le groupe constitué par les copolymères à blocs comprenant au moins un bloc élastomère de type polyéther et au moins un bloc thermoplastique polyamide (PEBA), et les mélanges de ces élastomères thermoplastiques.

Les TPE et en particulier les TPE préférentiels, sont décrits plus en détail dans ce qui suit.

### 2.2.1. Structure du TPE

La masse moléculaire moyenne en nombre (notée Mn) du TPE est préférentiellement comprise entre 30 000 et 500 000 g/mol, plus préférentiellement comprise entre 40 000 et 400 000 g/mol. Ainsi, on a constaté qu'une valeur comprise dans un domaine de 50 000 à 300 000 g/mol et mieux, de 60 000 à 150 000 était particulièrement bien adaptée, notamment à une utilisation du TPE dans une composition pour bande de roulement de pneumatique.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

De manière connue, les TPE présentent deux pics de température de transition vitreuse (Tg, mesurée selon ASTM D3418), la température la plus basse étant relative à la partie élastomère (par exemple polyéther) du TPE à blocs, et la température la plus haute étant relative à la partie thermoplastique (par exemple polyamide) du TPE. Ainsi, les blocs souples des TPE se définissent par une Tg inférieure à la température ambiante (25°C), tandis que les blocs rigides ont une Tg supérieure à 80°C.

Dans la présente demande, lorsqu'il est fait référence à la température de transition vitreuse du TPE, il s'agit de la Tg relative au bloc élastomère. Le TPE présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la bande de roulement lors d'une utilisation à très basse température ; pour une telle utilisation, la Tg du TPE est plus préférentiellement encore inférieure ou égale à -10°C. De manière préférentielle également, la Tg du TPE est supérieure à -100°C.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités éther et unités amide pour un copolymère blocs polyamide/ polyéther/ polyamide).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un copolymère dibloc : bloc thermoplastique / bloc élastomère. Le TPE peut aussi être un copolymère tribloc : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, le TPE multibloc peut être un enchaînement linéaire de blocs élastomères- blocs thermoplastiques.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### 2.2.2. Nature des blocs élastomères

Les blocs élastomères du TPE pour les besoins de l'invention, peuvent être tous les élastomères connus de l'homme de l'art.

La fraction de bloc élastomère dans le TPE est comprise dans un domaine allant de 10 à 95 %, préférentiellement de 20 à 92 %, plus préférentiellement de 25 à 90%.

Ces blocs élastomères possèdent de préférence une Tg (température de transition vitreuse) mesurée par DSC selon la norme ASTM D3418 de 1999, inférieure à 25°C, préférentiellement inférieure à 10°C, plus préférentiellement inférieure à 0°C et très préférentiellement inférieure à -10°C. De manière préférentielle également, la Tg des blocs élastomères est supérieure à -100°C. Conviennent notamment, les blocs ayant une Tg comprise entre 20°C et -70°C et plus particulièrement entre 0°C et -50°C.

De préférence, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en bande de roulement de pneumatique.

Selon un premier mode de réalisation préféré, le bloc élastomère est de type copolymère statistique de butadiène et de styrène ((H)SBR). De manière bien connue, le bloc (H)SBR comprend une teneur en styrène, une teneur en liaisons -1,2 de la partie butadiénique, et une teneur en liaisons -1,4 de la partie butadiénique, cette dernière se composant d'une teneur en liaisons trans-1,4 et d'une teneur en liaisons cis-1,4 lorsque la partie butadiénique n'est pas hydrogénée.

De manière préférentielle, on utilise notamment un bloc (H)SBR ayant une teneur en styrène comprise, par exemple dans un domaine allant de 10 à 60% en poids, de préférence de 20% à 50% en poids, et pour la partie butadiénique, une teneur en liaisons -1,2 comprise dans un domaine allant de 4% à 75% (% molaire), et une teneur en liaisons -1,4 comprise dans un domaine allant de 20% et 96% (% molaire).

La détermination du taux d'hydrogénation est réalisée par une analyse RMN. Les spectres sont acquis sur un spectromètre Avance 500 MHz BRUKER équipé d'une Cryosonde ¹H-X 5 mm. L'expérience RMN ¹H quantitative, utilise une séquence simple impulsion 30° et un délai de répétition de 5 secondes entre chaque acquisition. 64 accumulations sont réalisées. Les échantillons (environ 25mg) sont solubilisés dans le CS₂ environ 1mL, 100µl de cyclohexane deutéré sont ajouté pour faire le lock pendant l'acquisition. Les déplacements chimiques sont calibrés par rapport à l'impureté protonée du CS₂ δppm ¹H à 7.18 ppm référencé sur le TMS (δppm ¹H à 0ppm). Le spectre RMN 1H permet de quantifier la microstructure par intégration des massifs de signaux caractéristiques des différents motifs :
- Le styrène provenant du (H)SBR et des blocs polystyrène. Il est quantifiable dans la zone des aromatiques entre 6,0ppm et 7,3ppm pour 5 protons (en retirant l'intégrale du signal de l'impureté du CS2 à 7,18ppm).
- Le PB1-2 provenant du (H)SBR. Il est quantifiable dans la zone des éthyléniques entre 4,6ppm et 5,1 ppm pour 2 protons.
- Le PB1-4 provenant du (H)SBR. Il est quantifiable dans la zone des éthyléniques entre 5,1 ppm et 6,1ppm pour 2 protons et en supprimant 1 proton du motif PB 1-2.
- Le PB1-2 hydrogéné provenant de l'hydrogénation et ne présentant que des protons aliphatiques. Les CH3 pendant du PB1-2 hydrogéné ont été identifiés et sont quantifiables dans la zone des aliphatiques entre 0,4 et 0,8ppm pour 3 protons.
- Le PB1-4 hydrogéné provenant de l'hydrogénation et ne présentant que des protons aliphatiques. Il sera déduit par soustraction des protons aliphatiques des différents motifs en le considérant pour 8 protons.

La quantification de la microstructure peut être réalisée en % molaire comme suit : %molaire d'un motif =Intégrale 1H d'un motif/ Σ(intégrales 1H de chaque motif). Par exemple pour un motif de styrène : %molaire du styrène = (Intégrale 1H du styrène) / (Intégrale 1H du styrène+ Intégrale 1H du PB1-2 + Intégrale 1H du PB1-4 + Intégrale 1H du PB1-2 hydrogéné + Intégrale 1H du PB1-4 hydrogéné).

Selon le taux d'hydrogénation du bloc (H)SBR, la teneur en double liaison de la partie butadiénique du bloc (H)SBR peut diminuer jusqu'à une teneur de 0% molaire pour un bloc (H)SBR totalement hydrogéné. De préférence, dans les TPE à blocs (H)SBR et PS utiles aux besoins de l'invention, le bloc élastomère (H)SBR est hydrogéné de telle manière qu'une proportion allant de 25 à 100 % molaire des doubles liaisons dans la portion butadiène sont hydrogénées. Plus préférentiellement de 50 à 100% molaire et de manière très préférentielle de 80 à 100% molaire des doubles liaisons dans la portion butadiène sont hydrogénées.

La partie styrénique des blocs (H)SBR peut être composée par des monomères choisis parmi les monomères styréniques, et notamment choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alphaméthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et les 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et les 2,4,6-trifluorostyrène), le para-hydroxy-styrène, et les mélanges de ces derniers.

Selon un mode de réalisation plus préféré, les blocs élastomères peuvent être de type polyéther, en particulier un polyéther peut être composé par des monomères choisis parmi les alcools ou éther cycliques, préférentiellement les alcools ou éthers cycliques aliphatiques, tels que par exemple l'éthanol ou le tétrahydrofurane. Parmi les polyéthers, on choisira préférentiellement ceux choisis dans le groupe constitué par les polytétraméthylène glycol (PTMG), les polyéthylènes glycols (PEG), polypropylène éther glycol (PPG), le polyhexaméthylène éther glycol, le polytriméthylenether glycol (PO3G), le poly(3-alkyltétrahydrofurane), et leurs mélanges. Très préférentiellement, le polyéther est choisi dans le groupe constitué par les polytétraméthylène glycol (PTMG), les polyéthylènes glycols (PEG) et leurs mélanges.

Le bloc élastomère peut également être constitué de plusieurs blocs élastomères tels que définis ci-dessus.

### 2.2.3. Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (T1) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise oeuvre.

Pour les besoins de l'invention, les élastomères TPE comprennent un ou plusieurs bloc(s) thermoplastique(s) ayant de préférence une Tg (ou Tf, le cas échéant) supérieure ou égale à 80°C. Préférentiellement, ce bloc thermoplastique a une Tg (ou Tf, le cas échéant) comprise dans un domaine variant de 80°C à 250°C. De préférence, la Tg (ou Tf, le cas échéant) de ce bloc thermoplastique est préférentiellement de 80°C à 200°C, plus préférentiellement de 80°C à 180°C.

La fraction de bloc thermoplastique dans le TPE est comprise dans un domaine allant de 5 à 90 %, préférentiellement de 8 à 80 %, plus préférentiellement de 10 à 75%.

De préférence selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation en bande de roulement de pneumatique.

Selon un premier mode de réalisation préféré, les blocs thermoplastiques du TPE sont constitué(s) à partir de monomères styréniques polymérisés (PS). Les polystyrènes (PS) préférentiels sont obtenus à partir de monomères styréniques choisis dans le groupe constitué par le styrène non substitué, les styrènes substitués et leurs mélanges. Parmi les styrènes substitués, on choisira préférentiellement ceux choisis dans le groupe constitué par les méthylstyrènes (préférentiellement l'o-méthylstyrène, le m-méthylstyrène et le p-méthylstyrène, l'alpha-méthylstyrène, l'alpha-2-diméthylstyrène, l'alpha-4-diméthylstyrène et le diphényléthylène), le para-tertio-butylstyrène, les chlorostyrènes (préférentiellement l'o-chlorostyrène, le m-chlorostyrène, le p-chlorostyrène, le 2,4-dichlorostyrène, le 2,6-dichlorostyrène et le 2,4,6-trichlorostyrène), les bromostyrènes (préférentiellement l'o-bromostyrène, le m-bromostyrène, le p-bromostyrène, le 2,4-dibromostyrène, le 2,6-dibromostyrène et le 2,4,6-tribromostyrène), les fluorostyrènes (préférentiellement l'o-fluorostyrène, le m-fluorostyrène, le p-fluorostyrène, le 2,4-difluorostyrène, le 2,6-difluorostyrène et le 2,4,6-trifluorostyrène), le para-hydroxy-styrène, et les mélanges de ces derniers.

De manière très préférentielle, les blocs PS sont des blocs obtenus à partir de polystyrène non substitué.

Selon une variante de l'invention, le bloc polystyrène tel que défini ci-dessus peut être copolymérisé avec au moins un autre monomère de manière à former un bloc thermoplastique ayant une Tg (ou Tf, le cas échéant) telle que définie ci-dessus.

A titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Certains TPE particuliers, à bloc élastomère de type copolymère statistique butadiène-styrène éventuellement hydrogéné et à un bloc thermoplastique de type styrénique (TPE (H)SBR-PS), sont également parfois notés SOE, et ils sont les plus préférés pour les besoins de l'invention.

Selon un mode de réalisation plus préféré, les blocs thermoplastiques du TPE sont constitué(s) à partir de monomères non styréniques polymérisés (TPNS). Les blocs thermoplastiques non styréniques (TPNS) sont des blocs non styréniques, c'est-à-dire de préférence des thermoplastiques issus de la polymérisation de tout monomère approprié et ne comprenant pas de monomères styréniques ou moins de 5%.

De manière préférentielle, les blocs TPNS sont des blocs choisis parmi les blocs polyamides, polyesters, et leurs mélanges. De manière très préférentielle, les blocs TPNS sont des blocs de type polyamide et/ou polyester. Très préférentiellement, les blocs TPNS sont choisis dans le groupe constitué par les polyamides de type PA6, PA11 ou PA12, ou les polyesters de type PET ou PBT et les mélanges de ces derniers.

Les TPE particuliers, à blocs polyéther et TPNS particuliers dans lesquels les blocs thermoplastiques non styréniques sont des polyesters sont usuellement notés TPE-E ou TPC (copolyester thermoplastique) ou encore COPE (copolymère bloc éther-ester), et ils sont également préférés pour les besoins de l'invention.

Les TPE particuliers, à blocs polyéther et TPNS particuliers dans lesquels les blocs thermoplastiques non styréniques sont des polyamides sont usuellement notés TPE-A ou TPA (copolyamide thermoplastique) ou encore PEBA (copolyéther bloc amide), et ils sont particulièrement préférés pour les besoins de l'invention.

Le bloc thermoplastique peut également être constitué de plusieurs blocs thermoplastiques tels que définis ci-dessus.

### 2.2.4. Exemples de TPE

A titre d'exemples d'élastomères TPE à blocs (H)SBR et PS commercialement disponibles, on peut citer les élastomères de type SOE, commercialisés par la société Asahi Kasei sous la dénomination « SOE S1611 », « SOE L605 » ou encore « SOE L606 ».

A titre d'exemples d'élastomères TPE à blocs polyéther et TPNS commercialement disponibles, on peut citer les élastomères PEBA de type « PEBAX », commercialisés par la société Arkema, par exemple sous la dénomination « PEBAX 4033 », « PEBAX 6333 » ou encore les élastomères COPE de type « Pelprene P », commercialisés par la société Toyobo, par exemple sous la dénomination « Pelprene P40B ».

### 2.2.5. Quantité de TPE

Dans la composition des rayons du pneu de l'invention, l'élastomère TPE (c'est à dire le ou les élastomères TPE) représente de 30 à 50%, de préférence de 35 à 45% en poids de l'ensemble des polymères présents dans la composition.

### 2.3 Charge renforçante

La composition des rayons du pneu selon l'invention peut comprendre une ou plusieurs charges renforçantes, et de préférence lorsque la composition en comprend, à un taux total compris dans un domaine allant de 1 à 60 parties en poids pour 100 parties en poids de matrice polymérique (pcm).

On peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

De préférence pour l'invention la charge renforçante est du noir de carbone et/ou de la silice. Selon un mode de réalisation préféré, la charge renforçante majoritaire est du noir de carbone. Selon un autre mode de réalisation, encore plus préféré, la charge renforçante majoritaire est de la silice.

Le taux de charge renforçante est préférentiellement compris dans un domaine allant de 2 à 50 pcm, plus préférentiellement de 3 à 30 pcm, mieux de 5 à 20 pcm.

### 2.4 Additifs divers

La composition des rayons du pneu selon l'invention, en plus de ses constituants essentiels détaillés plus haut, peut comporter des additifs ajoutés à la composition, ces additifs pouvant être de manière bien connue de l'homme du métier, par exemple d'autres élastomères, des agents de protection contre le vieillissement, des plastifiants, des charges non renforçantes, des résines renforçantes (tels que résorcinol ou bismaléimide), ou encore un système de réticulation.

Lorsque la composition en comprend, le système de réticulation peut notamment être un système dit de vulcanisation, c'est-à-dire à base de soufre (ou d'un agent donneur de soufre) et d'un accélérateur de vulcanisation. A ce système de vulcanisation de base peuvent s'ajouter divers accélérateurs secondaires ou activateurs de vulcanisation connus tels que acide stéarique, oxyde de zinc, dérivés guanidiques, des retardateurs ou des agents antiréversion.

De préférence selon l'invention, la composition ne comprend pas de système de réticulation.

### 3. Propriétés de la composition des rayons

La composition des rayons du pneu selon l'invention, telle que décrite plus haut, permet d'obtenir des propriétés particulières et notamment un module d'Young élevé. On entendra par module d'Young élevé un module notamment supérieur à 1000 MPa, de préférence supérieur à 1100 MPa.

Il est connu que les compositions à haut module, typiquement supérieur à 1000 MPa présentent généralement un allongement à la rupture faible, c'est-à-dire la plupart du temps inférieur à 5%. Avec les compositions décrites pour les rayons du pneu de l'invention, on peut obtenir un allongement rupture supérieur, ce qui est permet au pneu de l'invention une bonne résistance à la déformation.

Ainsi, préférentiellement, dans les rayons du pneu selon l'invention, la composition des rayons présente un allongement à la rupture à 23°C supérieur à 8%, de préférence supérieur ou égal à 10%.

### EXEMPLES DE RÉALISATION DE L'INVENTION

### 1. Préparation des compositions

Des compositions T1, T2, T3, T4 et C1 ont été réalisées sur une extrudeuse « Kraus Maffei », en mélangeant tous les ingrédients (polyamide « RILSAN CLEAR G 170 » de la société ARKEMA, le cas échéant copolyamide à bloc éther (PEBA) « PEBAX 7033 » de la société ARKEMA, et le cas échéant du noir de carbone de série N234 de la société CABOT) à une température variant de 250 à 280°C. Les granulés obtenus sont ensuite introduits dans une presse à injecter, permettant la mise en forme des rayons avec une mesure des temps de cycles (temps de mise en oeuvre).

### 2. Tests effectués sur les compositions

Des feuilles de 1 mm telles qu'obtenues ci-dessus sont ensuite découpées au moyen d'une table de découpe ZUND afin d'obtenir des éprouvettes de 2.5 mm * 200 mm * 1 mm, pour des mesures de module d'Young, des éprouvettes de cassage pour les mesures d'allongement rupture, et des éprouvettes dites « barreau » de 20mm^{∗}10mm^{∗}1mm pour le test de mesure de tan(delta) par DMA.

La mesure de tan(delta) à 23°C est faite sur un viscoanalyseur DMA (Metravib V A4000). On enregistre la réponse d'un échantillon de composition, soumis à une sollicitation sinusoïdale en élongation alternée, à déformation imposée de 0,1% à la fréquence de 10Hz, en fonction de la température selon la norme ASTM D 1349-99. On relève en particulier les valeurs du tan(delta) à 23°C.

### 3. Résultats

Les compositions réalisées sont présentées dans le tableau 1 ci-dessous.

**Tableau 1**

| Composition | T1 | T2 | T3 | T4 | C1 |
|---|---|---|---|---|---|
| Polyuréthane (1) en pcm | 100 | 0 | 0 | 0 | 0 |
| Polymère thermoplastique (2) en pcm | 0 | 100 | 80 | 0 | 60 |
| Elastomère thermoplastique (3) en pcm | 0 | 0 | 20 | 100 | 40 |

| | | | | | |
|---|---|---|---|---|---|
| (1) Polyuréthane « Vibrathane B836 » de la société ADIPRENE (2) Polyamide « RILSAN CLEAR G 170 » de la société ARKEMA (3) Copolyamide à bloc éther (PEBA) « PEBAX 7033 » de la société ARKEMA | | | | | |

Les résultats des essais réalisés sont présentés dans le tableau 2 ci-dessous.

**Tableau 2**

| Composition | T1 | T2 | T3 | T4 | C1 |
|---|---|---|---|---|---|
| Module d'Young à 23°C (MPa) | 50 | 2000 | 1350 | 640 | 1200 |
| Allongement rupture à 23°C (%) | 460 | 5 | 6 | 350 | 10 |
| Tan(d) à 23°C | 0,07 | 0,03 | 0,03 | 0,08 | 0,03 |
| Temps de mise en oeuvre (min) | 30 | 5 | 5 | 5 | 5 |

On note que l'invention permet d'obtenir un matériau aux propriétés mécaniques requises pour les rayons, faiblement dissipatif, et injectable en grande série avec des temps de cycles plus courts. De plus le faible niveau d'hystérèse caractérisé par le tan(delta) à 23°C permet de baisser considérablement l'hystérèse des rayons et par conséquent de diminuer la résistance au roulement du pneu non pneumatique de l'invention.

## Revendications

1. Pneu non pneumatique à support structurel comprenant une bande de roulement, une bande annulaire, une pluralité de rayons s'étendant transversalement et radialement à l'intérieur de la bande annulaire et des moyens pour raccorder la pluralité de rayons avec une roue, **caractérisé en ce que** les rayons comprennent une composition polymérique à base d'au moins une matrice polymérique comprenant 50 à 70% d'un ou plusieurs polymères thermoplastiques dont la température de transition vitreuse (Tg), mesurée par DSC selon norme ASTM D3418, est comprise dans un domaine allant de 120 à 250°C et 30 à 50% d'un ou plusieurs élastomères thermoplastiques ; ledit ou lesdits élastomères thermoplastiques étant compatibles avec ledit ou lesdits polymères thermoplastiques, de telle façon que l'allongement à la rupture du mélange de ces polymères est supérieur ou égal à l'allongement à la rupture du ou des polymères thermoplastiques seuls, le ou les élastomères thermoplastiques étant des copolymères à blocs dont le ou les blocs élastomères sont des blocs de type polyéther.

2. Pneu selon la revendication 1, dans lequel la bande annulaire comprend un ou plusieurs matériaux renforcés dans une composition élastomérique.

3. Pneu selon la revendication 1 ou 2, dans lequel les rayons sont positionnés de telle façon que chaque rayon est orienté parallèlement à la direction axiale, ou en diagonale par rapport à la direction axiale, ou encore des rayons adjacents entre eux sont orientés selon des angles en diagonale opposés par rapport à la direction axiale, formant un zigzag dans le plan équatorial, ou également, la pluralité de rayons est orientée en paires croisées formant un motif en X se répétant dans le plan équatorial, ou enfin chaque rayon est en forme de V dans le plan équatorial.

4. Pneu selon l'une quelconque des revendications précédentes, dans lequel la matrice polymérique comprend de 55 à 65% de polymère thermoplastique.

5. Pneu selon l'une quelconque des revendications précédentes, dans lequel la matrice polymérique comprend de 35 à 45% d'élastomère thermoplastique.

6. Pneu selon l'une quelconque des revendications précédentes, dans lequel le ou les polymères thermoplastiques présentent une Tg comprise dans un domaine allant de 140 à 230°C, de préférence de 150°C à 220°C, mieux de 160°C à 210°C.

7. Pneu selon l'une quelconque des revendications précédentes, dans lequel le ou les polymères thermoplastiques sont choisis dans le groupe constitué par les polyamides, les polycarbonates, et les mélanges de ces derniers.

8. Pneu selon l'une quelconque des revendications précédentes, dans lequel le ou les polymères thermoplastiques sont un ou des polyamides amorphes.

9. Pneu selon l'une quelconque des revendications précédentes dans lequel le ou les polymères thermoplastiques sont un ou des polyamides amorphes, homopolymères ou copolymères constitués de monomères cycloaliphatiques et/ou aromatiques.

10. Pneu selon l'une quelconque des revendications précédentes, dans lequel le ou les élastomères thermoplastiques sont un ou des copolymères à blocs dont le ou les blocs élastomères sont choisis dans le groupe constitué par les polytétraméthylène glycol (PTMG), les polyéthylènes glycols (PEG), polypropylène éther glycol (PPG), le polyhexaméthylène éther glycol, le polytriméthylenether glycol (PO3G), le poly(3-alkyltétrahydrofurane), et les mélanges de ces derniers ; de préférence dans le groupe constitué par les polytétraméthylène glycol (PTMG), les polyéthylènes glycols (PEG), et les mélanges de ces derniers.

11. Pneu selon l'une quelconque des revendications précédentes, dans lequel le ou les élastomères thermoplastiques sont un ou des copolymères à blocs polyéthers et polyamides (PEBA).

12. Pneu selon l'une quelconque des revendications précédentes, dans lequel la composition des rayons comprend en outre une charge renforçante, de préférence dans une quantité comprise dans un domaine allant de 1 à 60 pcm.

13. Pneu selon la revendication précédente dans lequel la charge renforçante est du noir de carbone et/ou de la silice.

14. Pneu selon l'une quelconque des revendications précédentes, dans lequel ladite composition ne comprend pas de système de réticulation.

15. Pneu selon l'une quelconque des revendications précédentes, dans lequel ladite composition présente, un allongement à la rupture à 23°C supérieur à 8%, de préférence supérieur ou égal à 10%.

## Patentansprüche

1. Luftloser Reifen mit struktureller Stützung, umfassend einen Laufstreifen, einen ringförmigen Streifen, eine Vielzahl von Speichen, die sich quer und radial innerhalb des ringförmigen Streifens erstrecken, und Mittel zum Verbinden der Vielzahl von Speichen mit einem Rad, **dadurch gekennzeichnet, dass** die Speichen eine Polymerzusammensetzung auf Basis mindestens einer Polymermatrix umfassen, die 50 bis 70 % eines oder mehrerer thermoplastischer Polymere, deren Glasübergangstemperatur (Tg), gemessen mit DSC gemäß der Norm ASTM D3418, in einem Bereich von 120 bis 250 °C liegt, und 30 bis 50% eines oder mehrerer thermoplastischer Elastomere umfasst; wobei das oder die thermoplastischen Elastomere zu dem oder den thermoplastischen Polymeren kompatibel sind, so dass die Bruchdehnung der Mischung dieser Polymere größer oder gleich der Bruchdehnung des oder der thermoplastischen Polymere allein ist, wobei das oder die thermoplastischen Elastomere Block-Copolymere sind, deren Elastomerblock oder -blöcke Blöcke vom Polyethertyp sind.

2. Reifen nach Anspruch 1, bei dem der ringförmige Streifen ein oder mehrere verstärkte Materialien in einer Elastomerzusammensetzung umfasst.

3. Reifen nach Anspruch 1 oder 2, bei dem die Speichen so angeordnet sind, dass jede Speiche parallel zu der axialen Richtung oder schräg zu der axialen Richtung ausgerichtet ist, oder aber zueinander benachbarte Speichen gemäß schräg entgegengesetzten Winkeln zur axialen Richtung ausgerichtet sind, wobei sie ein Zickzack in der Äquatorialebene bilden, oder auch die Vielzahl von Speichen in gekreuzten Paaren ausgerichtet sind, die ein sich in der Äquatorialebene wiederholendes X-Muster bilden, oder schließlich jede Speiche in der Äquatorialebene V-förmig ist.

4. Reifen nach einem der vorhergehenden Ansprüche, bei dem die Polymermatrix von 55 bis 65 % thermoplastisches Polymer umfasst.

5. Reifen nach einem der vorhergehenden Ansprüche, bei dem die Polymermatrix von 35 bis 45 % thermoplastisches Elastomer umfasst.

6. Reifen nach einem der vorhergehenden Ansprüche, bei dem das oder die thermoplastischen Polymere eine Tg in einem Bereich von 140 bis 230 °C, bevorzugt von 150 °C bis 220 °C, besser von 160 °C bis 210 °C, aufweisen.

7. Reifen nach einem der vorhergehenden Ansprüche, bei dem das oder die thermoplastischen Polymere aus der Gruppe gewählt sind, die aus den Polyamiden, den Polycarbonaten und Mischungen davon besteht.

8. Reifen nach einem der vorhergehenden Ansprüche, bei dem das oder die thermoplastischen Polymere ein oder mehrere amorphe Polyamide sind.

9. Reifen nach einem der vorhergehenden Ansprüche bei dem das oder die thermoplastischen Polymere ein oder mehrere amorphe Polyamide, Homopolymere oder Copolymere, sind, die aus cycloaliphatischen und/oder aromatischen Monomeren bestehen.

10. Reifen nach einem der vorhergehenden Ansprüche, bei dem das oder die thermoplastischen Elastomere ein oder mehrere Block-Copolymere sind, deren Elastomerblock oder -blöcke aus der Gruppe gewählt sind, die aus den Polytetramethylenglycolen (PTMG), den Polyethylenglycolen (PEG), dem Polypropylenetherglycol (PPG), dem Polyhexamethylenetherglycol, dem Polytrimethylenetherglycol (PO3G), dem Poly(3-alkyltetrahydrofuran) und den Mischungen davon besteht; bevorzugt aus der Gruppe, die aus den Polytetramethyleneglycolen (PTMG), den Polyethylenglycolen (PEG) und den Mischungen davon besteht.

11. Reifen nach einem der vorhergehenden Ansprüche, bei dem das oder die thermoplastischen Elastomere ein oder mehrere Copolymere mit Polyether- und Polyamidblöcken (PEBA) sind.

12. Reifen nach einem der vorhergehenden Ansprüche, bei dem die Zusammensetzung der Speichen ferner einen verstärkenden Füllstoff umfasst, bevorzugt in einer Menge in einem Bereich von 1 bis 60 pcm.

13. Reifen nach dem vorhergehenden Anspruch, bei dem der verstärkende Füllstoff Ruß und/oder Silica ist.

14. Reifen nach einem der vorhergehenden Ansprüche, bei dem die Zusammensetzung kein Vernetzungssystem umfasst.

15. Reifen nach einem der vorhergehenden Ansprüche, bei dem die Zusammensetzung eine Bruchdehnung bei 23 °C von mehr als 8 %, bevorzugt von 10 % oder mehr aufweist.

## Claims

1. Structurally supported non-pneumatic tyre comprising a tread, an annular band, a plurality of spokes extending transversely and radially inside the annular band, and means for connecting the plurality of spokes to a wheel, **characterized in that** the spokes comprise a polymeric composition based on at least one polymeric matrix comprising 50 to 70% of one or more thermoplastic polymers, the glass transition temperature (Tg) of which, measured by DSC according to standard ASTM D3418, is within a range extending from 120 to 250°C and 30 to 50% of one or more thermoplastic elastomers, said thermoplastic elastomer(s) being compatible with said thermoplastic polymer(s), such that the elongation at break of the mixture of these polymers is greater than or equal to the elongation at break of the thermoplastic polymer(s) alone, the thermoplastic elastomer(s) being block copolymers, the elastomer block(s) of which are polyether-type blocks

2. Tyre according to Claim 1, wherein the annular band comprises one or more reinforced materials in an elastomeric composition.

3. Tyre according to Claim 1 or 2, wherein the spokes are positioned such that each spoked is oriented parallel to the axial direction, or diagonally with respect to the axial direction, or else spokes which are adjacent to one another are oriented according to diagonal opposed angles with respect to the axial direction, forming a zig-zag in the equatorial plane, or else the plurality of spokes is oriented in crossed pairs, forming an X-shaped pattern which repeats in the equatorial plane, or finally each spoke is V-shaped in the equatorial plane.

4. Tyre according to any one of the preceding claims, wherein the polymeric matrix comprises from 55 to 65% of thermoplastic polymer.

5. Tyre according to any one of the preceding claims, wherein the polymeric matrix comprises from 35 to 45% of thermoplastic elastomer.

6. Tyre according to any one of the preceding claims, wherein the thermoplastic polymer(s) have a Tg within a range extending from 140 to 230°C, preferably from 150°C to 220°C, better still from 160°C to 210°C.

7. Tyre according to any one of the preceding claims, wherein the thermoplastic polymer(s) are selected from the group consisting of polyamides, polycarbonates, and mixtures thereof.

8. Tyre according to any one of the preceding claims, wherein the thermoplastic polymer(s) are one or more amorphous polyamides.

9. Tyre according to any one of the preceding claims, wherein the thermoplastic polymer(s) are one or more homopolymeric or copolymeric amorphous polyamides consisting of cycloaliphatic and/or aromatic monomers.

10. Tyre according to the preceding claim, wherein the thermoplastic elastomer(s) are one or more block copolymers, the elastomer block(s) of which are selected from the group consisting of polytetramethylene glycols (PTMGs), polyethylene glycols (PEGs), polypropylene ether glycol (PPG), polyhexamethylene ether glycol, polytrimethylene ether glycol (PO3G), poly(3-alkyltetrahydrofuran), and mixtures thereof, preferably from the group consisting of polytetramethylene glycols (PTMGs), polyethylene glycols (PEGs) and mixtures thereof.

11. Tyre according to any one of the preceding claims, wherein the thermoplastic polymer(s) are one or more copolymers containing polyether and polyamide blocks (PEBAs).

12. Tyre according to any one of the preceding claims, wherein the composition of the spokes also comprises a reinforcing filler, preferably in an amount within a range extending from 1 to 60 pcm.

13. Tyre according to the preceding claim, wherein the reinforcing filler is carbon black and/or silica.

14. Tyre according to any one of the preceding claims, wherein said composition does not comprise a crosslinking system.

15. Tyre according to any one of the preceding claims, wherein said composition has an elongation at break at 23°C of greater than 8%, preferably greater than or equal to 10%.
